# EUROPEAN PATENT APPLICATION

(11) **EP 1 677 571 A1**
(43) Date of publication of application: **05.07.2006**
(21) Application number: 05028278.9
(22) Date of filing: 23.12.2005
(51) Int. Cl.: H04R 1/02, H04R 5/02, G06F 1/16

(54) **Portable computer with side direction sound port**

(30) Priority: 29.12.2004 CN 200410103623
(71) Applicant: ASUSTeK Computer Inc., Peitou Taipei (TW)
(72) Inventor: Wu, Chin-Chung, Taipei (TW)
(74) Representative: TER MEER - STEINMEISTER & PARTNER GbR

(57) **Abstract**

A side direction sound box is disposed in a mainframe of a portable computer. The sound box includes a first shell, an amplifier, and a second shell. The first shell has a first surface. The amplifier is disposed on the first surface of the first shell. The second shell is assembled with the first shell to form a containing space, a first opening, and a second opening, wherein the second shell has a second surface opposite to the first surface of the first shell, the amplifier is positioned in the containing space so as to divide the containing space into a first space connecting the first opening and a second space connecting the second opening, and the first opening and the second opening are formed on a side of the mainframe.

## Description

### BACKGROUND OF THE INVENTION

### Field of Invention

The invention relates to a portable computer and a side direction sound box thereof and, in particular, to a portable computer and a side direction sound box that can enhance the sound efficiency.

### Related Art

The portable computer is one of the information devices, which are facile for carrying. The portable computer can be used for the generally document processing. Moreover, it is usually equipped with an amplifier therein for achieving the audio-visual effect.

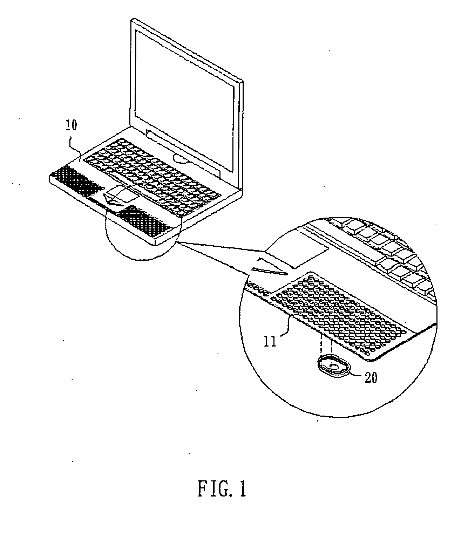

Referring to FIG. 1, in general, the conventional amplifier applied at the portable computer is nakedly disposed directly in the mainframe shell 10 of the portable computer. The mainframe shell 10 also has many sound holes 11 disposed thereon to transmit sound generated from the amplifier 20 out of the mainframe shell 10.

Regarding to this design, the amplifier 20 is located in an open space, so that the sound sent out from the amplifier is dispersed. Moreover, many components, such as motherboard, hard disk, and memory, etc, are disposed in the mainframe shell 10, and may absorb a part of the sound or cause noise-resonance to interfere the sound quality and to reduce the sound efficiency. Therefore, the higher power amplifier 20 is needed to provide a better sound. However, the higher power amplifier 20 will increase the power consumption of the portable computer. It is therefore a subject of the invention to increase the sound efficiency and quality of the amplifier in the portable computer.

### SUMMARY OF THE INVENTION

In view of the above, the invention is to provide a side direction sound box of a portable computer, which can enhance the sound efficiency.

The invention is also to provide a portable computer, which has the enhanced sound efficiency.

To achieve the above, a side direction sound box of a portable computer includes a first shell, a second shell and an amplifier. The first shell has a first protrusion, which is curved and disposed on a first surface of the first shell. The amplifier has a sound-diaphragm and a voice coil disposed on the first surface. A part of side edge of the sound-diaphragm is disposed along a part of the first protrusion. The second shell has a second protrusion, which is curved and disposed along a second surface of the second shell. The second surface is disposed opposite to the first surface of the first shell to cover the amplifier. Another part of the side edge of the sound-diaphragm is disposed along the second protrusion. The second shell is assembled with the first shell to form a containing space, a first opening and a second opening. The containing space is divided into the first space connecting a first opening and a second space connecting the second opening by the first protrusion, sound-diaphragm, and second protrusion.

To achieve the above, a portable computer includes a first mainframe shell, a second mainframe shell, an amplifier, and a cover. The first mainframe at least has a first protrusion, which is curved and disposed along the first surface of the first shell. The amplifier has a sound-diaphragm and a voice coil disposed on the first surface. A part of side edge of the sound-diaphragm is disposed along a part of the protrusion. The cover has a second protrusion, which is curved and disposed on a second surface of the second shell. The second surface is disposed opposite to the first surface of the first mainframe to cover the amplifier. Another part of side edge of the sound-diaphragm of the amplifier is disposed along the second surface. The second shell is assembled with the first shell to form a containing space, a first opening and a second opening. The containing space is divided into a first space connecting the first opening and a second space connecting the second opening by the first protrusion, sound-diaphragm, and second protrusion. The second mainframe shell is connected to the first mainframe shell to form a mainframe so as to cover the sound box.

To achieve the above, a side direction sound box of the invention is disposed in a portable computer and includes a containing shell and an amplifier. The containing shell has a containing space, a first opening, and a second opening. The containing space is divided into a first space connecting the first opening and a second space connecting the second opening. The first opening and the second opening are disposed on a side edge of the containing shell. The amplifier is disposed in the containing space.

As mentioned above, the side direction sound box of the portable computer of has the amplifier disposed in the sound box composed by the first shell and the second shell. Thus, the space where the amplifier is disposed in the portable computer is clear, so that the sound interference or the sound consumption caused by other components can be prevented. Therefore, the sound efficiency and the sound quality can be enhanced.

Additionally, as mentioned above, the portable computer has the amplifier disposed in the sound box composed by the first mainframe shell and the cover. Besides, the second mainframe shell is connected with the first mainframe shell to cover the sound box in the mainframe. Thus, the space where the amplifier is disposed in the portable computer is clear, so that the sound interference or the sound consumption caused by other components can be prevented. Therefore, the sound efficiency and the sound quality can be enhanced.

### BRIEF DESCRIPTION OF THE DRAWINGS

The invention will become more fully understood from the detailed description given herein below illustration only, and thus is not limitative of the present invention, and wherein:

FIG. 1 is a schematic diagram showing the conventional amplifier of the portable computer;

FIG. 2 is a schematic diagram showing a side direction sound box according to an embodiment of the invention;

FIG 3A to FIG 3B are exploded views showing a side direction sound box of a portable computer according to an embodiment of the invention;

FIG 4 is a schematic diagram showing a part of the amplifier of the side direction sound box of the portable computer according to the embodiment of the invention;

FIG 5A to FIG 5B are schematic diagrams showing the side direction sound box of the portable computer according to the embodiment of the invention;

FIG 6 is a schematic diagram showing a part of the portable computer according to the embodiment of the invention; and

FIG 7 is a schematic diagram showing another part of the portable computer according to the embodiment of the invention.

### DETAILED DESCRIPTION OF THE INVENTION

The side direction sound box of the portable computer of the present invention will be apparent from the following detailed description, which proceeds with reference to the accompanying drawings, wherein the same references relate to the same elements.

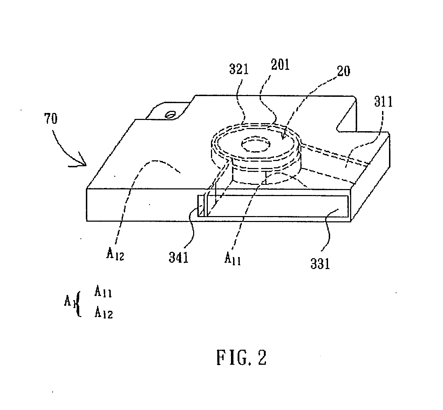

Referring to FIG. 2, the side direction sound box according to a preferred embodiment of the invention includes a containing shell 70, a first protrusion 311, a second protrusion 321, and an amplifier 20. The containing shell 70 has a containing space A₁, a first opening 331, and a second opening 341. The amplifier 20 is disposed in the containing space A₁. In the embodiment, the amplifier 20 has a sound-diaphragm 201 and a voice coil 202.

In the embodiment, the first protrusion 311 is curved and disposed in the containing space A₁, and a part of the first protrusion 311 is disposed along the side edge of the sound-diaphragm 201 of the amplifier 20. The second protrusion 321 is also curved and disposed in the containing space A₁, and a part of the second protrusion 321 is disposed along another side edge of the sound-diaphragm 201 of the amplifier 20. The containing space A₁ is divided into a first space A₁₁ and a second space A₁₂ by the first protrusion 311, second protrusion 321 and amplifier 20. In addition, the first space A₁₁ connects a first opening 331 and the second space connects a second opening 341. The first opening 331 and the second opening 341 are disposed in one side of the containing shell 70. In the embodiment, the first opening 331 is used for transmitting the sound generated from the sound-diaphragm 201 out of the containing shell 70, and the second opening 341 is used for transmitting the sound generated from the voice coil 202 out of the containing shell 70.

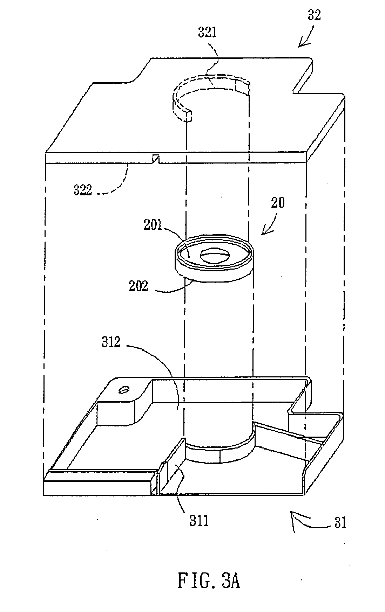

Referring to FIG. 3A, the side direction sound box of the portable computer according to the embodiment of the invention includes a first shell 31, a second shell 32, and an amplifier 20. In the embodiment, the amplifier 20 may be a film amplifier or a flat amplifier.

The first shell 31 has a first protrusion 311 which is curved and disposed on the first surface 312. In the embodiment, the first protrusion 311 may be a bar protrusion.

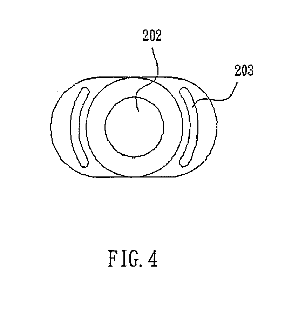

The amplifier 20 has a sound-diaphragm 201 and a voice coil 202. The voice coil 202 is disposed on the first surface 312, and a part of side edge of the sound-diaphragm 201 is disposed along a part of the first protrusion 311. In the embodiment, the amplifier 20 is disposed on the first surface 312 by a method of gluing. Additionally, referring to FIG. 4, in the embodiment, an auxiliary sound hole 203 is further disposed on the voice coil 202. The sound-diaphragm 211 gives off the low-pitched sound, and the auxiliary sound hole 203 gives off the high-pitched sound.

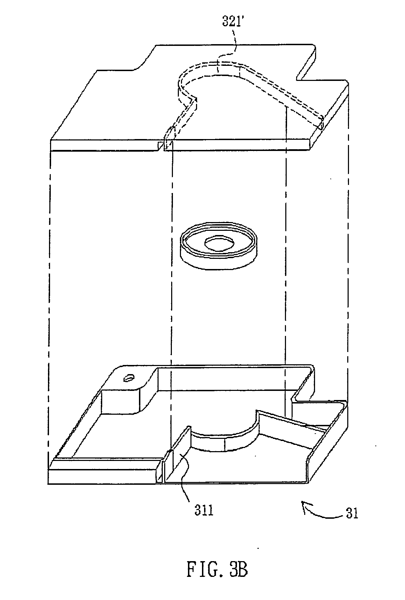

The second shell 32 has a second protrusion 321 which is curved and disposed on the second surface 322 of the second shell 32. In the embodiment, the second protrusion 321 may be a bar protrusion. Additionally, the second protrusion 321 may be another second protrusion 321' shown in FIG. 3B. In this case, a part of the second protrusion 321 is overlapped the first protrusion 311 of the first shell 31.

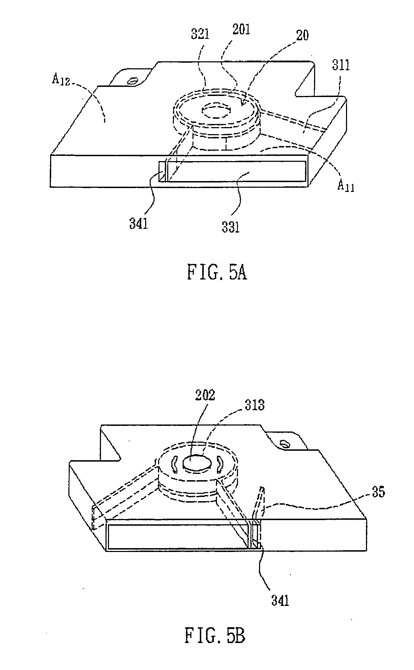

The second surface 322 is disposed opposite to the first surface 312 of the first shell 31 to cover the amplifier 20. Collocating to FIG. 5A, another part of the side edge of the sound-diaphragm 201 of the amplifier 20 is disposed along the second protrusion 321, and the sound box is divided into a first space A₁₁ and a second space A₁₂ by the first protrusion 311, the sound-diaphragm 201, and the second protrusion 321. Additionally, the first space A₁₁ connects a first opening 331 and the second space A₁₂ connects a second opening 341. In the embodiment, the first space A₁₁ and first opening 331 are used to transmit the sound generated from the sound-diaphragm 201 of the amplifier 20 out of the sound box, and the second space A₁₂ and second opening 341 are used to transmit the sound generated from the auxiliary sound hole 203 of the amplifier 20 out of the sound box. Referring to FIG. 5A in view of FIG. 5B, the third protrusion 35 can be further disposed in the sound box to limit the dimensions of the second opening 341 and transmit sound out of the second opening 341. Additionally, a hole 313 can be disposed on the first surface 312 opposite to the voice coil 202 to reduce the size of the sound box. Herein, the voice coil is disposed in the hole 313.

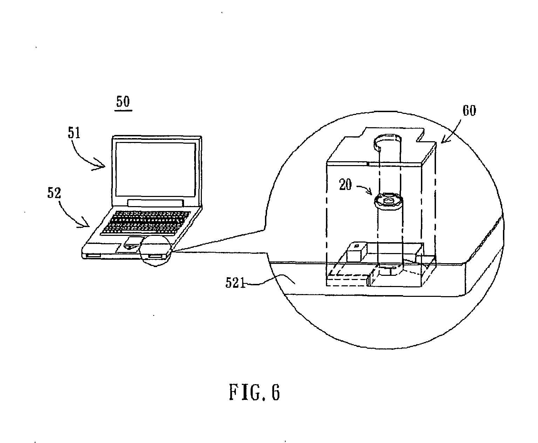

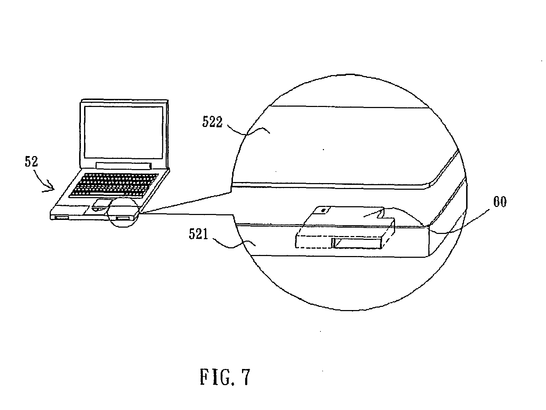

The side direction sound box of the portable computer of the invention can be integrated with the portable computer mainframe. Referring to FIG. 6 and FIG. 7, the portable computer 50 is composed of a display 51 and a mainframe 52. With reference to the enlarged portions, the portable computer includes a first mainframe shell 521, an amplifier 20, a cover 60, and a second mainframe shell 522.

The structures of the first mainframe shell 521 and the cover 60 are the same as the previously mentioned first shell 31 and second shell 32, and the first mainframe shell 521 and the cover 60 enclose the amplifier 20 to form a sound box. As shown in FIG. 7, the second mainframe shell 522 is assembled with the first mainframe shell 521 to form a mainframe 52, and the sound box is contained in the mainframe 52.

In the embodiment, the first mainframe shell 521 is assembled with the second mainframe 522 by a method of clipping or locking to form the mainframe 52. The first mainframe shell 521 is assembled with the cover 60 by a method of gluing.

In summary, the side direction sound box of the portable computer of the invention has the amplifier contained in the first shell and the second shell so as to transmit the sound generated from the amplifier through the first opening and the second opening and out of the mainframe without the interference and the consumption of other components. Therefore, the effect of utilizing the low power amplifier in the invention can compete with the effect of utilizing the high power amplifier in the prior art. Besides, the sound quality can be enhanced by using the side direction sound box of the invention.

In addition, the portable computer of the invention has the amplifier contained in the first mainframe shell and the cover, and uses the second mainframe shell to connect with the first mainframe shell so as to form the portable computer mainframe. Thus, the sound box positioned in the mainframe can transmit the sound generated from the amplifier through the first opening and the second opening and out of the mainframe without the interference and the consumption of other components. Therefore, the effect of utilizing the low power amplifier in the invention can compete with the effect of utilizing the high power amplifier in the prior art. Besides, the sound quality can be enhanced by using the side direction sound box of the invention.

Comparing to the conventional naked amplifier, there are several advantages of this invention as following:
1. The amplifier is positioned in the sound box, so that the sound interference or the sound consumption by other components can be avoided, resulting in superior sound quality with utilizing the low power amplifier.
2. The efficiency of the stereo or the sound diversification can be enhanced as transmitting the sound respectively through the first space and the second space.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A side direction sound box, which is disposed in a mainframe of a portable computer, the sound box comprising:
a first shell having a first surface;
an amplifier disposed on the first surface; and
a second shell assembled with the first shell to form a containing space, a first opening, and a second opening, wherein the second shell has a second surface opposite to the first surface of the first shell, the amplifier is positioned in the containing space so as to divide the containing space into a first space connecting the first opening and a second space connecting the second opening, and the first opening and the second opening are formed on a side of the mainframe.

2. The sound box according to claim 1, further comprising:
a first protrusion disposed on the first surface of the first shell, wherein a part of
the first protrusion is curved and disposed along a part of a side surface of the amplifier; and
a second protrusion disposed on the second surface of the second shell, wherein a part of the second protrusion is curved and disposed along another part of the side surface of the amplifier.

3. The sound box according to claim 2, wherein the amplifier comprises:
a voice coil disposed on the first surface of the first shell; and
a sound-diaphragm disposed toward the second surface of the second shell,
wherein a side edge of the sound-diaphragm is disposed along the first protrusion, another side edge of the sound-diaphragm is disposed along the second protrusion, and the containing space is divided into the first space and the second space with the first protrusion, the second protrusion, and the sound-diaphragm.

4. The sound box according to claim 2, further comprising:
a third protrusion disposed in the containing space to limit the dimension of the second opening.

5. The sound box according to claim 1, wherein the first shell and the second shell are assembled by a method of gluing.

6. A portable computer, comprising:
a first mainframe shell having a first surface;
an amplifier disposed on the first surface;
a cover assembled with the first mainframe shell to form a containing space, a
first opening, and a second opening, wherein the cover has a second surface opposite to the first surface of the first mainframe shell, the amplifier is positioned in the containing space so as to divide the containing space into a first space connecting the first opening and a second space connecting the
second opening, and the first opening and the second opening are formed on a side of the mainframe; and
a second mainframe shell connected to the first mainframe shell to form a mainframe, which covers the sound box.

7. The portable computer according to claim 6, further comprising:
a first protrusion disposed on the first surface of the first mainframe shell,
wherein a part of the first protrusion is curved and disposed along a part of a side surface of the amplifier; and
a second protrusion disposed on the second surface of the cover, wherein a part of
the second protrusion is curved and disposed along another part of the side surface of the amplifier.

8. The portable computer according to claim 7, wherein the amplifier further comprises:
a voice coil disposed on the first surface of the first mainframe shell; and
a sound-diaphragm disposed toward the second surface of the cover, wherein a side edge of the sound-diaphragm is disposed along the first protrusion, another side edge of the sound-diaphragm is disposed along the second protrusion, and the containing space is divided into the first space and the second space with the first protrusion, the second protrusion, and the sound-diaphragm.

9. The portable computer according to claim 6, wherein the first mainframe shell is connected with the second mainframe shell by a method of clipping.

10. The portable computer according to claim 6, wherein the first mainframe shell is connected with the second mainframe shell by a method of locking.
